# EUROPEAN PATENT APPLICATION

(11) **EP 4 535 686 A1**
(43) Date of publication of application: **09.04.2025**
(21) Application number: 23815728.3
(22) Date of filing: 12.05.2023
(51) Int. Cl.: H04B 10/112

(54) **OPTICAL COMMUNICATION DEVICE, OPTICAL COMMUNICATION METHOD, AND OPTICAL COMMUNICATION PROGRAM**

(30) Priority: 31.05.2022 JP 2022088396
(71) Applicant: Kyocera Corporation, Kyoto-shi, Kyoto 612-8501 (JP)
(72) Inventor: NAKAO, Masaki, Kyoto-shi, Kyoto 612-8501 (JP)
(74) Representative: Viering, Jentschura & Partner mbB Patent- und Rechtsanwälte
(86) International application number: PCT/JP2023/017903
(87) International publication number: WO 2023/233968

(57) **Abstract**

An optical communication apparatus includes a light emitting element, a body portion having a spherical shape or a rod-like shape, a plurality of light receiving elements arranged on a surface of the body portion at predetermined intervals, a moving mechanism configured to movably support the light emitting element above the surface of the body portion, and a controller configured to control the moving mechanism to move the light emitting element to a position facing another optical communication apparatus based on a reception status of an optical signal received by the plurality of light receiving elements from the other optical communication apparatus.

## Description

### TECHNICAL FIELD

The present disclosure relates to an optical communication apparatus, an optical communication method, and an optical communication program.

### BACKGROUND OF INVENTION

An optical communication system is known which uses visible light (hereinafter simply referred to as "light") as a transmission medium in, for example, underwater communication. Since light has high directivity, in light communication in the related art, communication is generally performed with a transmission side and a reception side facing each other on the assumption that a light communication apparatus of the transmission side and a light communication apparatus of the reception side are fixed.

Patent Documents 1 and 2 disclose an optical communication apparatus that rotatably supports a housing accommodating a pair of a light emitting element and a light receiving element whose optical axes are oriented in the same direction, the housing being rotated in various directions. Such an optical communication apparatus detects, by rotation of the housing, an optical signal from another optical communication apparatus as a communication partner using the light receiving element, and directs the optical axis of the light emitting element and the optical axis of the light receiving element toward the other optical communication apparatus.

### CITATION LIST

### PATENT LITERATURE

Patent Document 1: JP 6725835 B
Patent Document 2: JP 2008-28756 A

### SUMMARY

In a first aspect, an optical communication apparatus includes a light emitting element, a body portion having a spherical shape or a rod-like shape, a plurality of light receiving elements disposed on a surface of the body portion at predetermined intervals, a moving mechanism configured to movably support the light emitting element above the surface, and a controller configured to control the moving mechanism to move the light emitting element to a position facing another optical communication apparatus based on a reception status of an optical signal received by the plurality of light receiving elements from the other optical communication apparatus.

In a second aspect, an optical communication method executed by an optical communication apparatus includes the steps of: receiving an optical signal from another optical communication apparatus by using a plurality of light receiving elements arranged at predetermined intervals on a surface of a body portion having a spherical shape or a rod-like shape; and performing control to move, based on a reception status of the optical signal, a light emitting element to a position facing the other optical communication apparatus, by using a moving mechanism movably supporting the light emitting element above the surface.

In a third aspect, an optical communication program causes an optical communication apparatus to execute the steps of: receiving an optical signal from another optical communication apparatus by using a plurality of light receiving elements arranged at predetermined intervals on a surface of a body portion having a spherical shape or a rod-like shape; and performing control to move, based on a reception status of the optical signal, a light emitting element to a position facing the other optical communication apparatus, by using a moving mechanism movably supporting the light emitting element above the surface.

### BRIEF DESCRIPTION OF THE DRAWINGS

FIG. 1 is a diagram illustrating a configuration of an optical communication system according to an embodiment.
FIG. 2 is a diagram illustrating an outer appearance configuration of the optical communication apparatus according to the embodiment.
FIG. 3 is a diagram illustrating an outer appearance of the optical communication apparatus according to the embodiment as viewed from above (direction "A" in FIG. 2).
FIG. 4 is a diagram illustrating an outer appearance of the optical communication apparatus according to the embodiment as viewed from the side (direction "B" in FIG. 2).
FIG. 5 is a diagram illustrating a block configuration of the optical communication apparatus according to the embodiment.
FIG. 6 is a diagram for describing movement control for a light emitting element and control of each of light receiving elements according to the embodiment.
FIG. 7 is a diagram for describing a first specific example of movement control for the light emitting element according to the first embodiment.
FIG. 8 is a diagram for describing a second specific example of movement control for the light emitting element according to the first embodiment.
FIG. 9 is a diagram for describing a third specific example of movement control for the light emitting element according to the first embodiment.
FIG. 10 is a diagram for describing a status in which optical communication is disrupted according to the embodiment.
FIG. 11 is a diagram for describing a restoration operation performed when the optical communication is disrupted, according to an embodiment.
FIG. 12 is a diagram illustrating an operation flow of the optical communication apparatus according to the embodiment.
FIG. 13 is a diagram illustrating an operation flow of the optical communication apparatus according to the second embodiment, the operation flow being used when the optical communication is disrupted.
FIG. 14 is a diagram for describing a first variation of the optical communication apparatus according to the embodiment.
FIG. 15 is a diagram for describing a second variation of the optical communication apparatus according to the embodiment.
FIG. 16 is a diagram for describing a third variation of the optical communication apparatus according to the embodiment.
FIG. 17 is a diagram for describing a fourth variation of the optical communication apparatus according to the embodiment.
FIG. 18 is a diagram for describing the fourth variation of the optical communication apparatus according to the embodiment.
FIG. 19 is a diagram for describing the fourth variation of the optical communication apparatus according to the embodiment.
FIG. 20 is a diagram for describing a fifth variation of the optical communication apparatus according to the embodiment.
FIG. 21 is a diagram for describing the fifth variation of the optical communication apparatus according to the embodiment.
FIG. 22 is a diagram for describing the fifth variation of the optical communication apparatus according to the embodiment.
FIG. 23 is a diagram for describing another embodiment.
FIG. 24 is a diagram for describing another embodiment.

### DESCRIPTION OF EMBODIMENTS

The method of integrally changing the direction of a light emitting element and a light receiving element as in the related art has room for improvement in terms of efficient optical communication. For example, in the related art, when an approximate direction of another optical communication apparatus as a communication partner is not recognized at the start of communication of the optical communication apparatus, a long time may be required until an optical signal from the other optical communication apparatus is detected by a light receiving element. The related art has difficulty in coping with a scenario involving handover of an optical communication apparatus.

The present disclosure is intended to enable efficient optical communication.

An optical communication system and an optical communication apparatus according to an embodiment will be described with reference to the drawings. In the description of the drawings, the same or similar parts are denoted by the same or similar reference signs.

### (1) Configuration of optical communication system

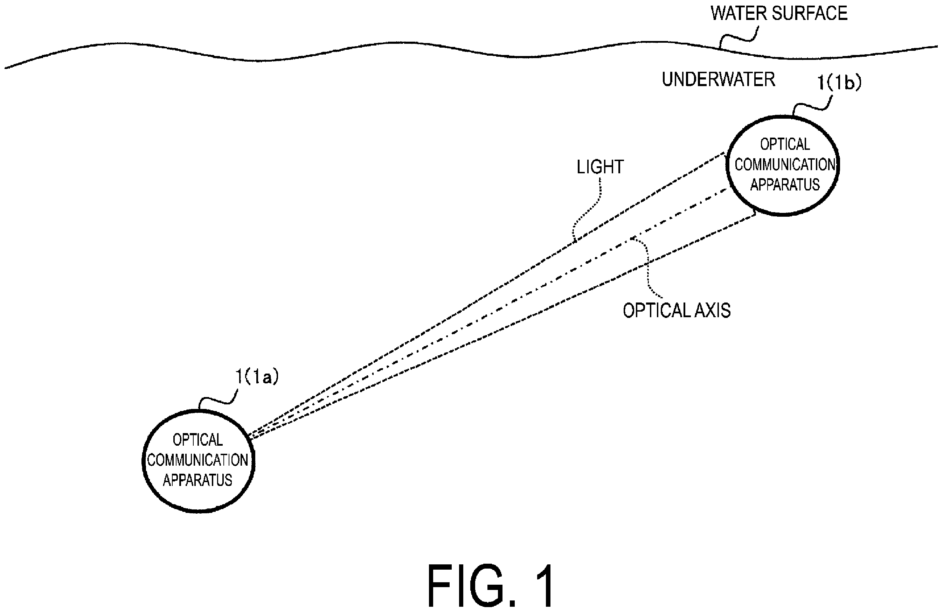

First, a configuration of an optical communication system according to an embodiment will be described. FIG. 1 illustrates a configuration of the optical communication system according to the embodiment.

The optical communication system according to the embodiment is a system in which optical communication apparatuses 1 perform underwater optical communication with each other. In other words, each optical communication apparatus 1 is an underwater optical communication apparatus. Although undersea optical communication is mainly assumed below as the underwater optical communication, the underwater optical communication may be optical communication in a lake or a river. Note that the optical communication system according to the embodiment may be applied not only to underwater optical communication but also to terrestrial (or space) optical communication.

In the example of FIG. 1, an operation of transmitting an optical signal from one optical communication apparatus 1 (1a) to the other optical communication apparatus 1 (1b) is illustrated. The one optical communication apparatus 1 (1a) transmits optical communication with the optical axis of the one optical communication apparatus 1 (1a) directed to the other optical communication apparatus 1 (1b). Similarly, the other optical communication apparatus 1 (1b) transmits the optical axis toward the one optical communication apparatus 1 (1a). Here, the one optical communication apparatus 1 (1a) is assumed to be a terminal apparatus and the other optical communication apparatus 1 (1b) is a base station apparatus.

In the example of FIG. 1, each base station apparatus 1b is located near a water surface. For example, the base station apparatus 1b may be fixed to a buoy. The base station apparatus 1b may be connected to a network via a backhaul line. The backhaul line may be a wireless and/or wired line. In order to efficiently secure a communication area underwater, the base station apparatus 1b may be installed at a predetermined distance from other adjacent base station apparatuses. For example, the base station apparatus 1b may be temporarily installed during a period in which an underwater investigation using the terminal apparatus 1a is performed.

The terminal apparatus 1a may be configured to be movable underwater. The terminal apparatus 1a performs optical communication (to be more specific, underwater optical communication) with the base station apparatus 1b. That is, the base station apparatus 1b is a serving base station for each terminal apparatus 1a. The terminal apparatus 1a may include a sensor such as an image sensor (including a camera) to generate sensor data. For example, the terminal apparatus 1a may transmit uplink data including sensor data, to the base station apparatus 1b through the optical communication. The terminal apparatus 1a may receive downlink (DL) including instruction data, from the base station apparatus 1b through the optical communication. The terminal apparatus 1a may perform moving and sensing operations (such as image taking and the like) based on the instruction data.

### (2) Configuration of Optical Communication Apparatus

Now, a configuration of the optical communication apparatus 1 according to the embodiment will be described.

### (2.1) Outer Appearance Configuration of Optical Communication Apparatus

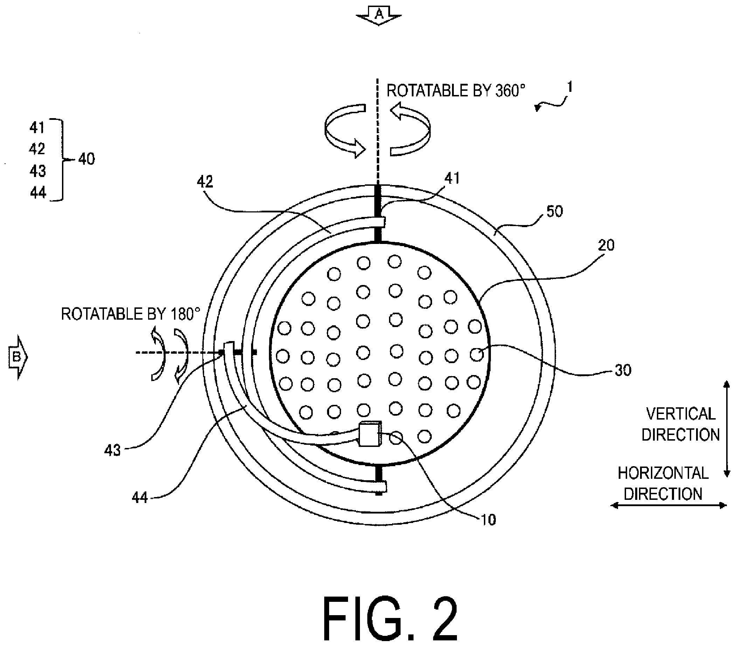

FIG. 2 is a diagram illustrating an outer appearance configuration of the optical communication apparatus 1 according to the embodiment.

According to the embodiment, the optical communication apparatus 1 includes a light emitting element 10, a body portion 20 having a spherical shape, a plurality of light receiving elements 30 arranged on a surface of the body portion 20 at predetermined intervals, and a moving mechanism 40 movably supporting the light emitting element 10 above the surface of the body portion 20. As described above, by arranging the plurality of light receiving elements 30 at predetermined intervals on the surface of the body portion 20 having a spherical shape, optical signals arriving from various directions can simultaneously be received. Accordingly, a communication partner located in an unknown direction can be efficiently detected. The optical axis of the light emitting element 10 can be oriented in various directions by the moving mechanism 40. Accordingly, the number of light emitting elements 10 can be reduced to only one, and power consumption, heat generation, and interference with other optical communication apparatuses can be suppressed.

The plurality of light receiving elements 30 are dispersedly arranged on the entire surface of the body portion 20. As will be described in detail later, the plurality of light receiving elements 30 are arranged in a two dimensional array in the vertical direction and the horizontal direction. The optical axis of each light receiving element 30 is oriented in the normal direction of the surface (i.e., curved surface) of the body portion 20.

In the embodiment, the optical communication apparatus 1 includes a spherical housing 50 that accommodates the light emitting element 10, the body portion 20, the plurality of light receiving elements 30, and the moving mechanism 40. The housing 50 is formed of a light transmissive material (for example, a transparent resin). This enables optical communication by the light emitting element 10 and the light receiving elements 30, while allowing entry of water into the optical communication apparatus 1 to be prevented even when the optical communication apparatus 1 is in water.

In the embodiment, the moving mechanism 40 includes a first rotation shaft 41 provided in the body portion 20, a first arm 42 rotatably supported by the first rotation shaft 41 and rotationally moving the light emitting element 10 in a first direction (horizontal direction), a second rotation shaft 43 provided in the first arm 42, and a second arm 44 rotatably supported by the second rotation shaft 43 and rotationally moving the light emitting element 10 in a second direction (vertical direction) orthogonal to the first direction. As described above, the moving mechanism 40 includes a two-axis gimbal mechanism, and the optical axis of the light emitting element 10 can be oriented in all directions by the moving mechanism 40, and the optical axis of the light emitting element 10 can always be set to face the communication partner.

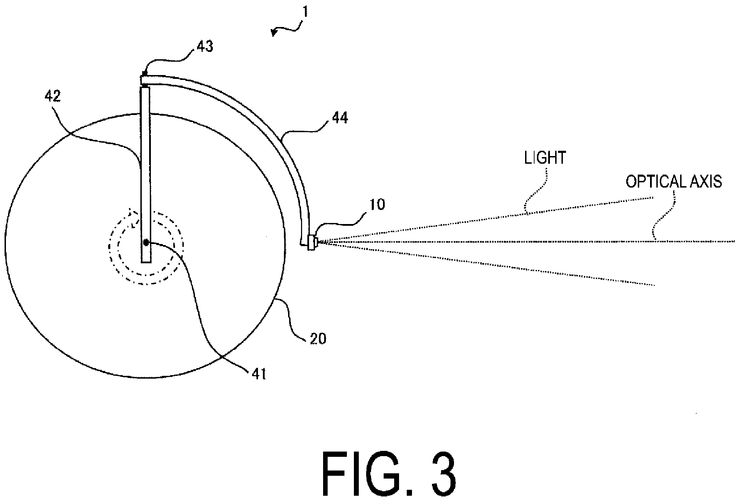

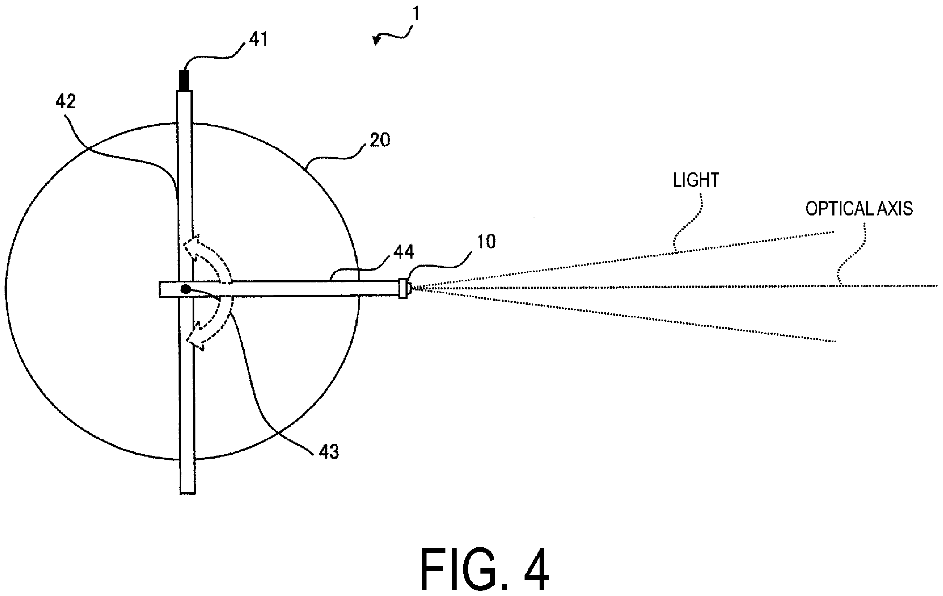

FIG. 3 is a diagram illustrating an outer appearance of the optical communication apparatus 1 viewed from above (direction "A" in FIG. 2), and FIG. 4 is a diagram illustrating an outer appearance of the optical communication apparatus 1 viewed from the side (direction "B" in FIG. 2). However, in FIGS. 3 and 4, the light receiving elements 30 and the housing 50 are not illustrated.

The first rotation shaft 41 is provided in the vertical direction of the body portion 20. The first rotation shaft 41 is rotationally driven by, for example, an actuator provided in the body portion 20. The first arm 42 is formed in an arc shape, and both end portions of the first arm 42 are supported by the first rotation shaft 41. The first arm 42 is formed in an arc shape (semi-arc shape) having a central angle of 180°. The rotation of the first rotation shaft 41 rotates the first arm 42 in the horizontal direction, thus allowing the light emitting element 10 and the optical axis thereof to be rotated by 360° in the horizontal direction.

The second rotation shaft 43 is horizontally provided on the first arm 42 at an intermediate position of the first arm 42 in the vertical direction. The second rotation shaft 43 is rotationally driven by, for example, an actuator provided in the first arm 42. The second arm 44 is formed in an arc shape. One end portion of the second arm 44 is supported by the second rotation shaft 43. The light emitting element 10 is provided at the other end portion of the second arm 44. The second arm 44 is formed in an arc shape having a central angle of 90°. The light emitting element 10 is disposed on the second arm 44 with the optical axis of the light emitting element 10 coinciding with the normal direction of the body portion 20, having a spherical shape. The second arm 44 is rotated in the vertical direction by the rotation of the second rotation shaft 43, thus allowing the light emitting element 10 and the optical axis thereof to be rotated by 180° in the vertical direction.

Note that the moving mechanism 40 may be provided with a wire for transmitting an electric signal from the body portion 20 to the light emitting element 10 and a wire for transmitting driving power to the actuator.

### (2.2) Block Configuration of Optical Communication Apparatus

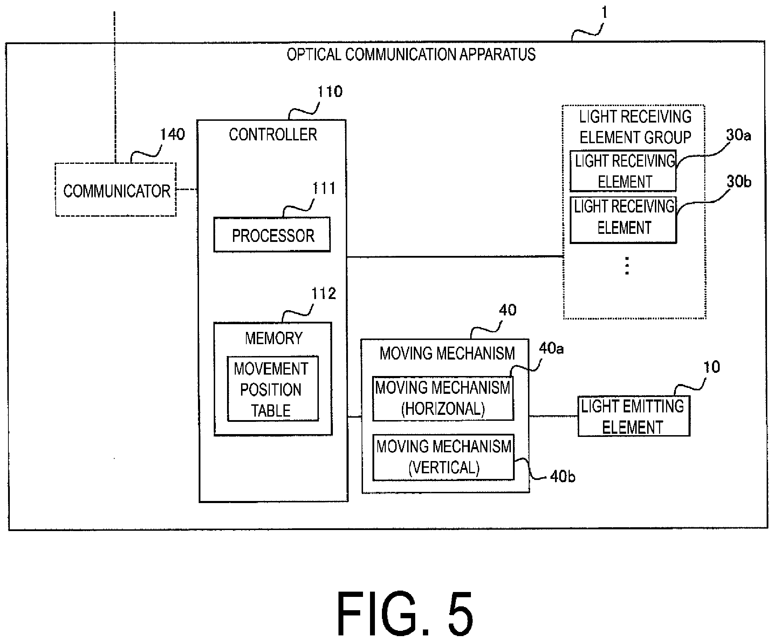

FIG. 5 is a diagram illustrating a block configuration of the communication apparatus 1 according to the embodiment.

The optical communication apparatus 1 includes the light emitting element 10, the plurality of light receiving elements 30 (30a, 30b, ...) constituting a light receiving element group, the moving mechanism 40, and a controller 110. The optical communication apparatus 1 may include a battery to supply electric power necessary for the optical communication apparatus 1 to operate. The controller 110 may be provided in the body portion 20.

The light emitting element 10 is controlled by the controller 110 via the moving mechanism 40. The light emitting element 10 may be a laser diode or a light emitting diode. The light emitting element 10 may include a drive circuit. The light emitting element 10 converts an electrical signal (transmission signal) output from the controller 110 via the moving mechanism 40 into an optical signal and transmits the optical signal.

Each light receiving element 30 receives an optical signal, converts the received optical signal into an electric signal (reception signal), and outputs the reception signal to the controller 110. Each light receiving element 30 may be a photodiode.

The moving mechanism 40 moves the light emitting element 10 under the control of the controller 110. The moving mechanism 40 includes a moving mechanism 40a that moves the light emitting element 10 in the horizontal direction and a moving mechanism 40b that moves the light emitting element 10 in the vertical direction. The moving mechanism 40a includes a first rotation shaft 41 and a first arm 42. The moving mechanism 40b includes a second rotation shaft 43 and a second arm 44.

The controller 110 controls overall operation of the optical communication apparatus 1. For example, the controller 110 controls the light emitting element 10, each light receiving element 30, and the moving mechanism 40. The controller 110 includes at least one processor 111 and at least one memory 112. The memory 112 stores a program to be executed by the processor 111 and information to be used for processing by the processor 111. The processor 111 may include a digital signal processor and a CPU. The digital signal processor performs modulation and demodulation, coding and decoding, and the like on digital signals. The CPU executes the program stored in the memory 112 to thereby perform various types of processing. Although details will be described later, the memory 112 holds a movement position table in which a movement target position (coordinates) of the light emitting element 10 is associated with the light receiving elements 30.

The controller 110 controls the moving mechanism 40 to move the light emitting element 10 to a position facing another optical communication apparatus based on a reception status of an optical signal received by the plurality of light receiving elements 30 from the other optical communication apparatus. Specifically, the controller 110 detects the direction of the communication partner based on the reception intensity distribution of the optical signals received by the plurality of light receiving elements 30, and moves the light emitting element 10 in the detected direction to cause the light emitting element 10 to always face the communication partner. Such movement control of the light emitting element 10 will be described in detail later.

In the embodiment, the optical signal (reception signal) used for the movement control of the light emitting element 10 is a pilot signal including a known signal sequence. The pilot signal is also referred to as a reference signal. The optical signal (reception signal) used for the movement control of the light emitting element 10 may be a synchronization signal.

The optical communication apparatus 1 may include a communicator 140 that performs communication other than optical communication (for example, wired communication or acoustic wave communication). When the optical communication apparatus 1 is a base station apparatus, the communicator 140 may be a backhaul communicator that performs backhaul communication via a backhaul line. The communicator 140 may receive, from an external apparatus, a command for controlling (or triggering) the movement of the moving mechanism 40. In this case, the controller 110 may control the movement of the moving mechanism 40 in accordance with the command.

### (3) Operation of Optical Communication Apparatus

Operation of the optical communication apparatus 1 according to the embodiment will be described.

### (3.1) Movement Control of Light Emitting Element and Control of Each Light Receiving Element

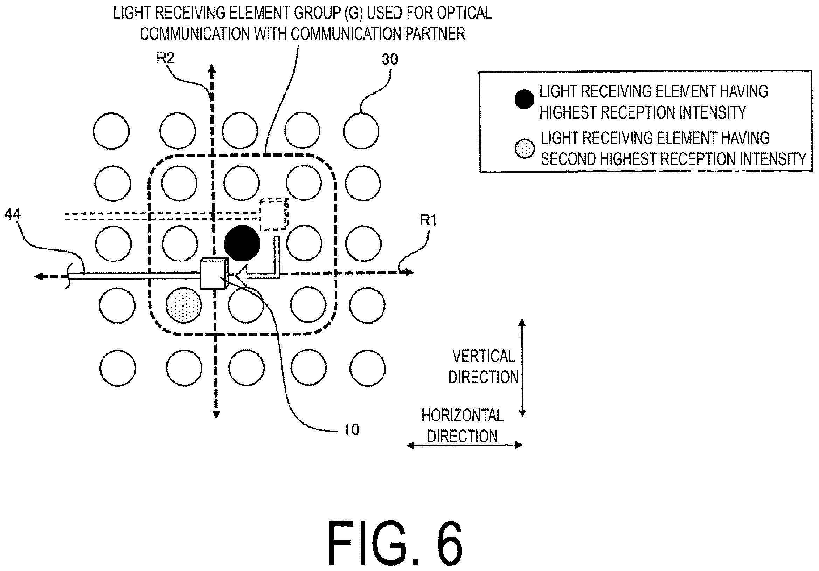

FIG. 6 is a diagram for describing the movement control of the light emitting element 10 and the control of each light receiving element 30, according to the third embodiment. In FIG. 6, a part of the body portion 20 is illustrated in an enlarged manner.

The controller 110 controls the moving mechanism 40 to move the light emitting element 10 to, as a target position, a position near the light receiving element 30 having the highest reception intensity of the pilot signal. Thus, the light emitting element 10 can be moved to a position corresponding to the direction in which the communication partner is present, and the optical axis of the light emitting element 10 can be oriented in the direction in which the communication partner is present. Note that, in FIG. 6, a possible movement path of the light emitting element 10 in the horizontal direction is denoted by "R1", and a possible movement path of the light emitting element 10 in the vertical direction is denoted by "R2".

Here, the controller 110 positions the light emitting element 10 in such a manner that the light emitting element 10 and the moving mechanism 40 (in particular, the second arm 44) are not present directly above each light receiving element 30. As a result, a decrease in the reception sensitivity of each light emitting element 30 can be suppressed. In the embodiment, the controller 110 identifies the first light receiving element 30 having the highest reception intensity of the pilot signal and the second light receiving element 30 having the second highest reception intensity of the pilot signal, and controls the moving mechanism 40 to move the light emitting element 10 to, as the target position, a position on a straight line connecting the first light receiving element 30 and the second light receiving element 30 or a position near the straight line. Thus, the light emitting element 10 can be moved to an appropriate position.

The controller 110 may periodically perform control of the moving mechanism 40 (that is, movement control of the light emitting element 10) based on the reception intensity of the pilot signal. Although details will be described later, the period may be variable with which the moving mechanism 40 is controlled based on the reception intensity of the pilot signal. By using reception of a command from an external apparatus as a trigger, the controller 110 may control the moving mechanism 40 based on the reception intensity of the pilot signal.

When moving the light emitting element 10, the controller 110 controls the moving mechanism 40 in such a manner that the light emitting element 10 does not pass directly above each light receiving element 30. For example, when moving the light emitting element 10, the controller 110 controls the moving mechanism 40 to move the light emitting element 10 in the vertical direction and in the horizontal direction in a time division manner. In FIG. 6, the controller 110 moves the light emitting element 10 by one light receiving element pitch in the vertical direction (specifically, downward), and then moves the light emitting element 10 by one light receiving element pitch in the horizontal direction (specifically, leftward). This enables suppression of a decrease in the reception sensitivity of each light receiving element 30 caused by the movement of the light emitting element 10.

The controller 110 controls the plurality of light receiving elements 30 to perform a reception operation (for example, data reception) in optical communication with another optical communication apparatus (communication partner) by using a light receiving element group (G) including only the light receiving element 30 having the highest reception intensity of the pilot signal and a plurality of adjacent light receiving elements 30 adjacent to the light receiving element 30 having the highest reception intensity. Specifically, the controller 110 performs the operation of reception from the communication partner by using only the light receiving element group (G) corresponding to the direction in which the communication partner is present instead of all the light receiving elements 30 of the optical communication apparatus 1. This enables a reduction in the power consumption and the processing load of the optical communication apparatus 1.

Here, the controller 110 controls the plurality of light receiving elements 30 to perform the operation (for example, search operation) of receiving a pilot signal from an optical communication apparatus other than the communication partner currently in optical communication by using the light receiving elements 30 not included in the light receiving element group (G), that is, the light receiving elements 30 not used for the operation of reception from the communication partner. As a result, the controller 110 can detect an optical communication apparatus that is a candidate for a switching destination (for example, a handover destination) of optical communication even during execution of optical communication. Such a search operation is preferably performed intermittently from the viewpoint of power consumption reduction. However, in order to further reduce the power consumption, the controller 110 may always suspend the light receiving elements 30 not included in the light receiving element group (G).

### (3.2) Specific Example of Movement Control of Light Emitting Element

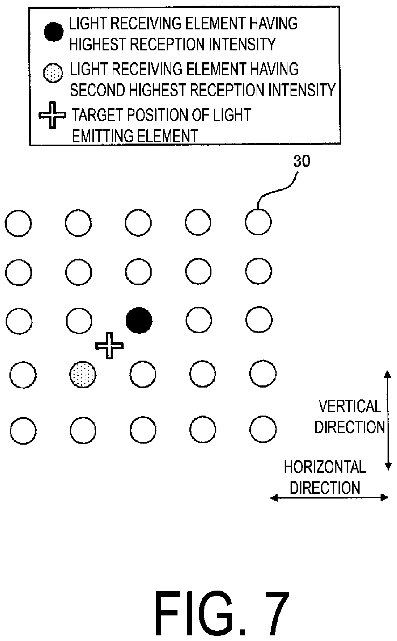

FIG. 7 is a diagram for describing a first specific example of movement control of the light emitting element 10 according to the first embodiment.

The controller 110 holds, as a movement position table in advance, the movement target positions (coordinates) of the light emitting element 10 corresponding to the light receiving element 30 having the highest reception intensity (first light receiving element) and the light receiving element 30 having the second highest reception intensity (second light receiving element). Then, the controller 110 uses the movement position table to move the light emitting element 10 to a position between the first light receiving element and the second light receiving element. In the first specific example, the first light receiving element and the second light receiving element are adjacent to each other, and the controller 110 moves the light emitting element 10 to an intermediate position between the first light receiving element and the second light receiving element.

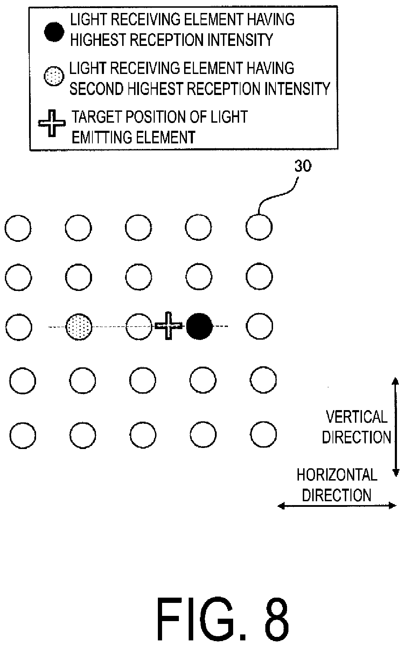

FIG. 8 is a diagram for describing a second specific example of movement control of the light emitting element 10 according to the embodiment.

In the second specific example, the first light receiving element and the second light receiving element are not adjacent to each other. In such a case, the controller 110 uses the movement position table to move the light emitting element 10 to, as the target position, a position near the first light receiving element and on a straight line connecting the first light receiving element and the second light receiving element.

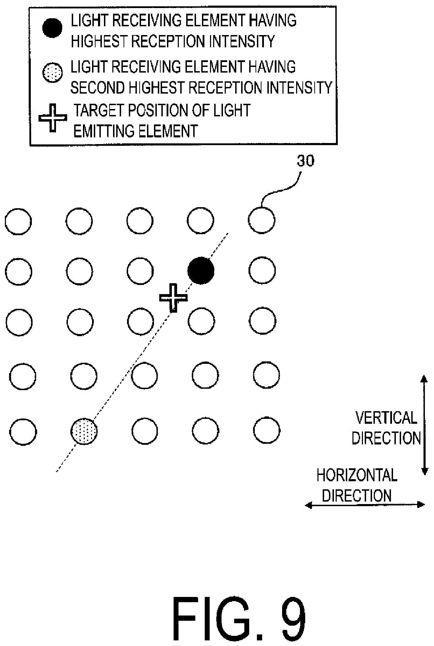

FIG. 9 is a diagram for describing a third specific example of movement control of the light emitting element 10 according to the embodiment.

In the third specific example, the first light receiving element and the second light receiving element are not adjacent to each other, and the second light receiving element is located obliquely with respect to the first light receiving element. The controller 110 uses the movement position table to move the light emitting element 10 to, as the target position, a position near the first light receiving element and on a straight line connecting the first light receiving element and the second light receiving element. However, when the straight line connecting the first light receiving element and the second light receiving element is oblique, the target position may be a position slightly misaligned with the position on the straight line. For example, for simplification, the target position may be rounded to an angular position determined when division results in approximately eight directions using the first light receiving element as a reference.

### (3.3) Recovery Operation Performed when Optical Communication Is Disrupted

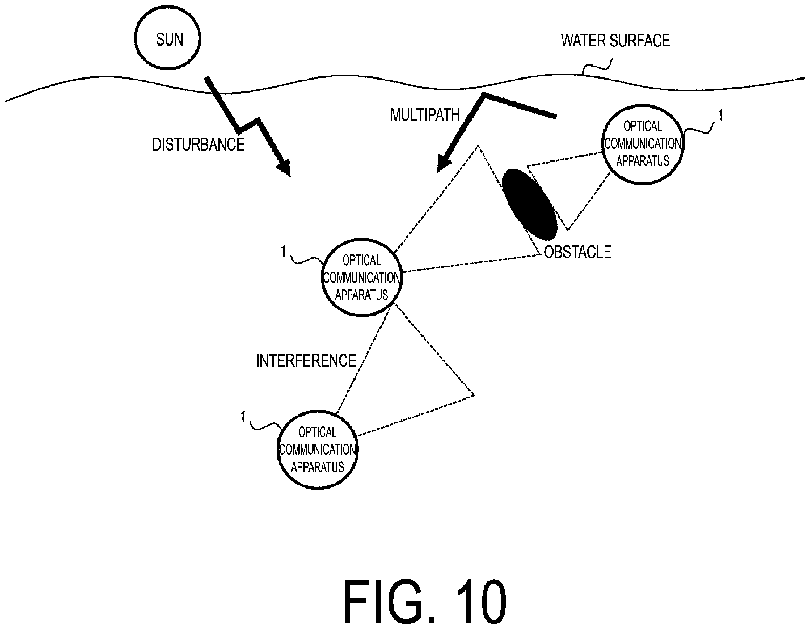

FIG. 10 is a diagram for describing a status in which the optical communication is disrupted, according to the embodiment.

Due to factors such as an obstacle, disturbance light, multipath, or interference with another optical communication apparatus, the reception intensity in a direction different from that in which the communication partner is in may increase in the optical communication apparatus 1. In this case, the direction of the optical axis of the light emitting element 10 may be disturbed and communication disconnection may occur. For example, when the optical communication apparatus 1 is a terminal apparatus, downlink signals from the base station apparatus may be received, whereas uplink signals may fail to reach the base station apparatus. The optical communication apparatus 1 (the controller 110) determines that communication disconnection has occurred based on, for example, failure to receive an acknowledgement (ACK) from the communication partner.

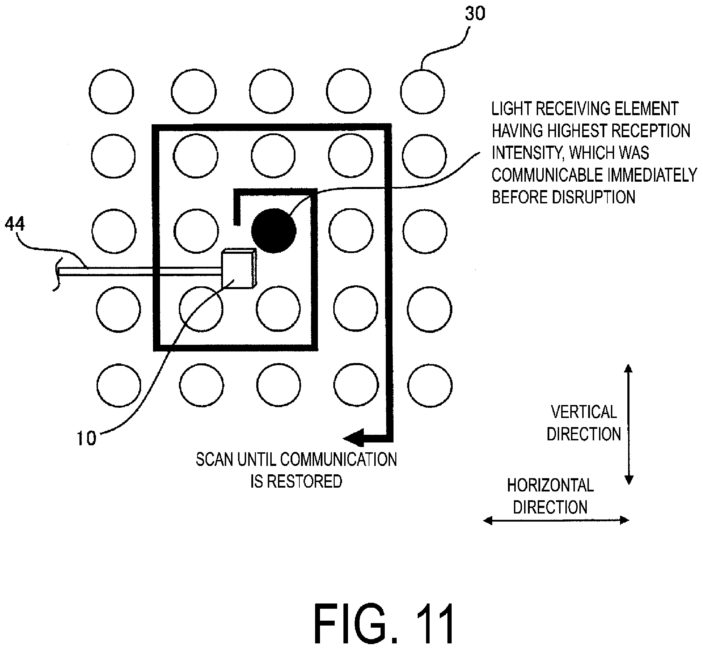

FIG. 11 is a diagram for describing a restoration operation performed when the optical communication is disrupted, according to the second embodiment.

When detecting that the optical communication with another optical communication apparatus (communication partner) is disrupted, the controller 110 controls the moving mechanism 40 to sequentially move (hereinafter, also referred to as "scan") the light emitting element 10 from a position near the light receiving element 30 having the highest reception intensity before the optical communication is disrupted until the optical communication is restored, in order of increasing distance from the light receiving element 30 having the highest reception intensity. Here, the controller 110 may cause the light emitting element 10 to constantly emit light during such scanning. Alternatively, the controller 110 may cause the light emitting element 10 to periodically emit light.

When moving the light emitting element 10, the controller 110 controls the moving mechanism 40 in such a manner that the light emitting element 10 does not pass directly above each light receiving element 30. For example, when moving the light emitting element 10, the controller 110 controls the moving mechanism 40 to move the light emitting element 10 in the vertical direction and in the horizontal direction in a time division manner. In FIG. 11, the controller 110 moves the light emitting element 10 in the following order.
- Moving the light emitting element 10 upward by one light receiving element pitch,
- Moving the light emitting element 10 rightward by one light receiving element pitch,
- Moving the light emitting element 10 downward by one light receiving element pitch,
- Moving the light emitting element 10 downward by one light receiving element pitch,
- Moving the light emitting element 10 leftward by one light receiving element pitch,
- Moving the light emitting element 10 leftward by one light receiving element pitch,
- Moving the light emitting element 10 upward by one light receiving element pitch,
- Moving the light emitting element 10 upward by one light receiving element pitch,
- Moving the light emitting element 10 upward by one light receiving element pitch,
- Moving the light emitting element 10 rightward by one light receiving element pitch,
- Moving the light emitting element 10 rightward by one light receiving element pitch,
- Moving the light emitting element 10 rightward by one light receiving element pitch,
- Moving the light emitting element 10 downward by one light receiving element pitch,
- Moving the light emitting element 10 downward by one light receiving element pitch,
- Moving the light emitting element 10 downward by one light receiving element pitch, and
- Moving the light emitting element 10 downward by one light receiving element pitch.

Here, the controller 110 may stop at each position determined in the movement position table (in the example of FIG. 11, an intermediate point among four adjacent light receiving elements 30) and cause the light emitting element 10 to emit light. When the acknowledgement (ACK) can be received from the communication partner during the scanning, the controller 110 may determine that the optical communication is restored and end the scanning (the movement of the light emitting element 10). Note that a scan range may be determined in advance in order to omit scanning in a direction (such as the back side of the sphere) in which the communication partner is clearly not present. For example, the controller 110 may perform scanning over a range up to N reception pixels as an upper limit starting from a position near the light receiving element 30 having the highest reception intensity before the optical communication is disrupted.

### (3.4) Operation Flow

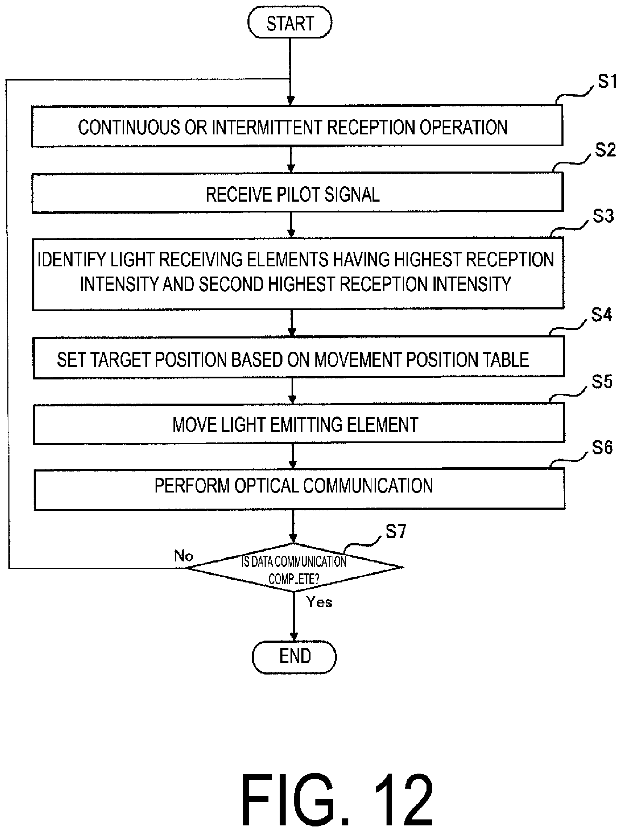

FIG. 12 is a diagram illustrating an operation flow of the optical communication apparatus 1 according to the embodiment.

In step S1, the controller 110 controls the plurality of light receiving elements 30 to perform a reception operation continuously or intermittently.

In step S2, at least one of the plurality of light receiving elements 30 receives a pilot signal from another optical communication apparatus.

In step S3, the controller 110 identifies the light receiving element 30 having the highest reception intensity of the pilot signal and the light receiving element 30 having the second highest reception intensity of the pilot signal.

In step S4, the controller 110 sets (determines) the target position of the light emitting element 10 using the movement position table based on the light receiving elements 30 identified in step S3.

In step S5, the controller 110 controls the moving mechanism 40 to move the light emitting element 10 to the target position set in step S4.

In step S6, the controller 110 performs optical communication with another optical communication apparatus.

When the optical communication with the other optical communication apparatus is completed (step S7: Yes), the flow ends. When the optical communication with another optical communication apparatus is not completed (step S7: No), the controller 110 returns the processing to step S1 and performs an operation of adjusting the optical axis of the light emitting element 10.

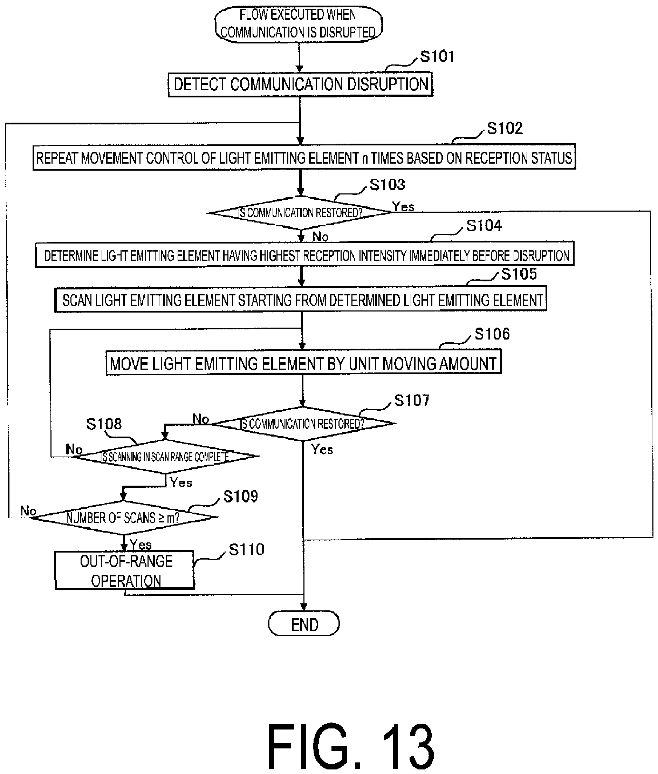

FIG. 13 is a diagram illustrating an operation flow used when the optical communication of the optical communication apparatus 1 is disrupted, according to the second embodiment.

In step S101, the controller 110 detects disruption of optical communication.

In step S102, the controller 110 attempts to restore the optical communication by repeating a predetermined number of times (n times) the movement control of the light emitting element 10 based on the reception status of the pilot signal. When the optical communication is restored (step S103: Yes), the flow ends.

When the optical communication is not restored (step S103: No), in step S104, the controller 110 identifies the light receiving element 30 having the highest reception intensity immediately before the optical communication is disrupted.

In step S105, the controller 110 attempts to restore optical communication by performing scanning (first scanning) of the light emitting element 10 starting from the light receiving element 30 identified in step S104.

In step S106, the controller 110 moves the light emitting element 10 by a unit moving amount (for example, by one light receiving element pitch). Here, when the optical communication is restored (step S107: Yes), the flow ends.

When the optical communication is not restored (step S107: No), in step S108, the controller 110 determines whether the scanning in the scan range is completed. When determining that the scanning in the scan range is not completed (step S108: No), the controller 110 returns the processing to step S106.

When determining that the scanning in the scan range is completed (step S108: Yes), the controller 110 determines whether the number of times of scanning performed to restore the optical communication is equal to or more than a predetermined number of times (m times). When the number of times of scanning is equal to or more than the predetermined number of times (m times) (step S109: Yes), in step S110, the controller 110 assumes that the optical communication with the communication partner is out of range and performs an out-of-range operation. When the number of times of scanning is less than the predetermined number of times (m times) (step S109: No), the controller 110 returns the processing to step S102.

### (4) First Variation

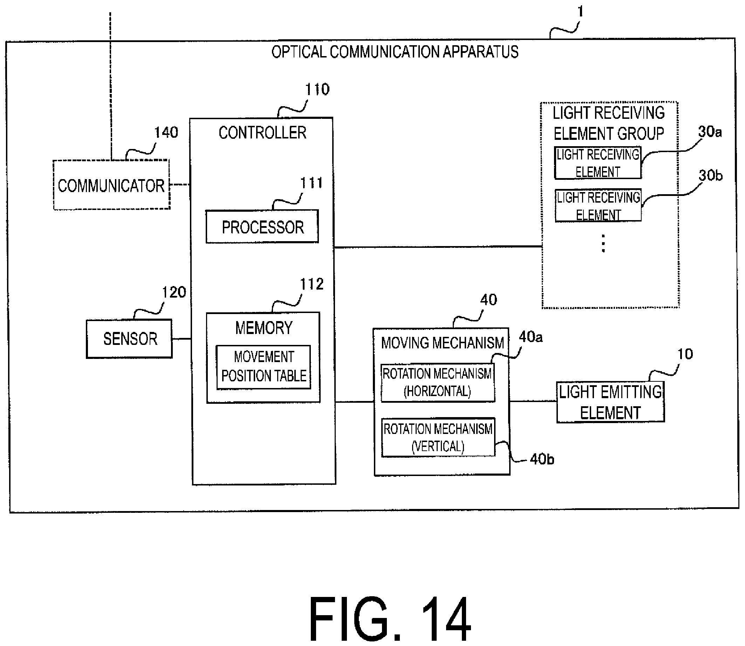

First, with reference to FIG. 14, a first variation of the optical communication apparatus 1 according to the embodiment described above will be described.

In the first variation, the optical communication apparatus 1 includes a sensor 120 for detecting shaking of the optical communication apparatus 1. For example, an acceleration sensor can be used as the sensor 120. The controller 110 changes, based on the output of the sensor 120, a control frequency being a frequency of performing movement control of the light emitting element 10 based on the reception status of the pilot signal. This enables an efficient reduction in the power consumption and the processing load of the optical communication apparatus 1.

For example, under the assumption that the control of the moving mechanism 40 based on the reception intensity of the pilot signal (that is, the movement control of the light emitting element 10) is periodically performed with a first period as a default, the controller 110 changes the first period to a second period shorter or longer than the first period based on the output of the sensor 120. When a value indicating shaking of the optical communication apparatus 1 becomes equal to or greater than a predetermined value, the controller 110 may change the first period to the second period shorter than the first period to shorten the first period. When the value indicating the shaking of the optical communication apparatus 1 becomes less than the predetermined value, the controller 110 may change the first period to the second period longer than the first period so as to extend the first period.

### (5) Second Variation

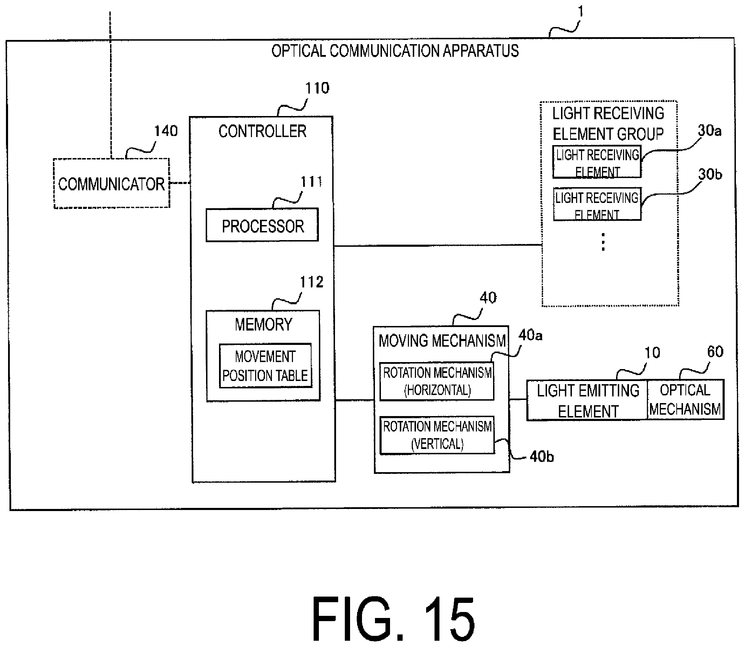

Now, with reference to FIG. 15, a second variation of the optical communication apparatus 1 according to the embodiment described above will be described.

The optical communication apparatus 1 according to the second variation includes an optical mechanism 60 used to adjust the directivity angle of the light emitting element 10. The optical mechanism 60 may include a lens and an actuator. The controller 110 determines a change frequency (that is, the number of changes per unit time) that is a frequency at which the light receiving element 30 having the highest reception intensity of the pilot signal is changed. When the change frequency exceeds a predetermined frequency, the controller 110 controls the optical mechanism 60 to increase the directivity angle (i.e., the spread of light) of the light emitting element 10.

When the change frequency is high, the cause may be that the optical communication apparatus 1 and/or the communication partner is strongly shaking or is in motion, or there is an obstacle in the communication path. In this case, the alignment of the light emitting element 10 may fail to catch up, disrupting the optical communication. Thus, when the change frequency exceeds a predetermined frequency, such a problem can be solved by increasing the directivity angle of the light emitting element 10.

For example, on the assumption that the directivity angle of the light emitting element 10 is a first directivity angle as a default, the controller 110 changes the directivity angle to a second directivity angle narrower or wider than the first directivity angle based on the change frequency. When the change frequency becomes equal to or greater than a predetermined value, the controller 110 may change the first directivity angle to a second directivity angle that is wider than the first directivity angle to increase the first directivity angle. When the change frequency is less than the predetermined value, the controller 110 may change the first directivity angle to a second directivity angle that is narrower than the first directivity angle so as to narrow the first directivity angle.

When the controller 110 controls the optical mechanism 60 to increase the directivity angle of the light emitting element 10, the controller 110 may perform control to decrease a throughput of optical communication with another optical communication apparatus (communication partner) according to the increase in the directivity angle. The amount of light reaching the communication partner is reduced by increasing the directivity angle, and thus the transmission resistance can be enhanced by reducing the throughput of the optical communication. Examples of a method of reducing the throughput of optical communication include a method of reducing the operating frequency (clock frequency) of the light emitting element 10 and/or a method of changing a modulation and coding scheme.

Similarly to the first variation, when the optical communication apparatus 1 includes the sensor 120, the controller 110 may control the optical mechanism 60 based on the output of the sensor 120.

### (6) Third Variation

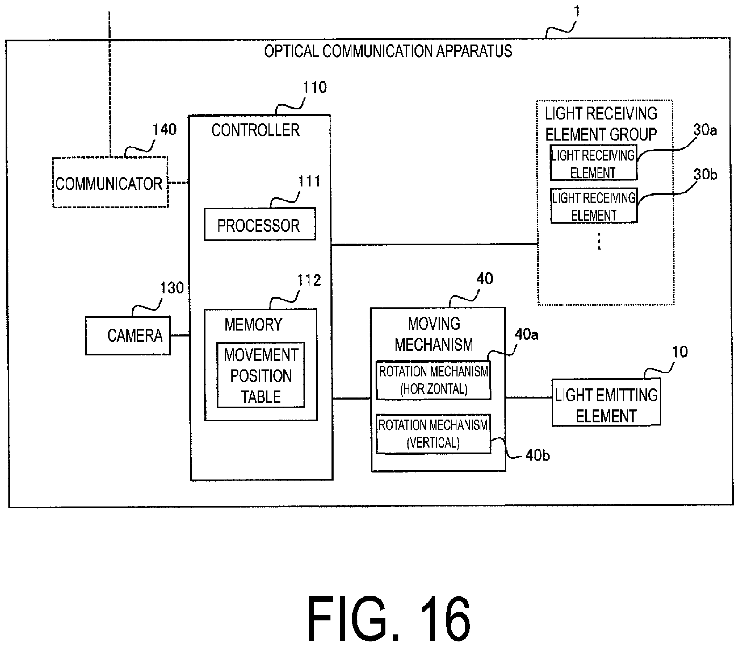

Now, with reference to FIG. 16, a third variation of the optical communication apparatus 1 according to the embodiment described above will be described.

The optical communication apparatus 1 according to the second variation includes a camera 130 to capture an image. The controller 110 controls the moving mechanism 40 based on the reception status of the pilot signal and the image data obtained by the camera 130.

For example, the controller 110 may determine the target position when the light emitting element 10 is moved, from the reception intensity distribution of the optical signals received by the plurality of light receiving elements 30 and the position and/or the direction of the communication partner estimated using the camera 130.

The controller 110 may use the camera 130 at the time of the restoration operation performed when the optical communication is disrupted. For example, the controller 110 may preferentially scan the position and/or the direction of the communication partner estimated using the camera 130. Alternatively, for example, the controller 110 may determine the scan range according to the position and/or direction of the communication partner estimated using the camera 130.

### (7) Fourth Variation

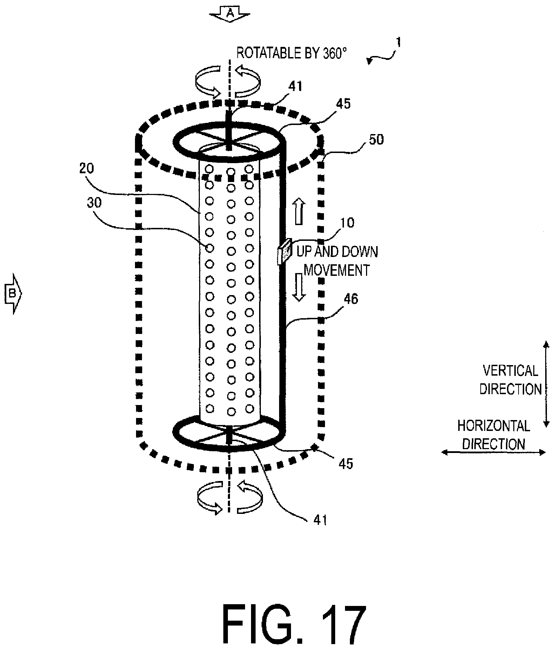

Now, with reference to FIG. 17, a fourth variation of the optical communication apparatus 1 according to the embodiment described above will be described.

In the optical communication apparatus 1 according to the fourth variation, the body portion 20 has a rod-like shape. Specifically, the body portion 20 has a columnar shape. Similarly, the housing 50, which is light transmissive, also has a columnar shape.

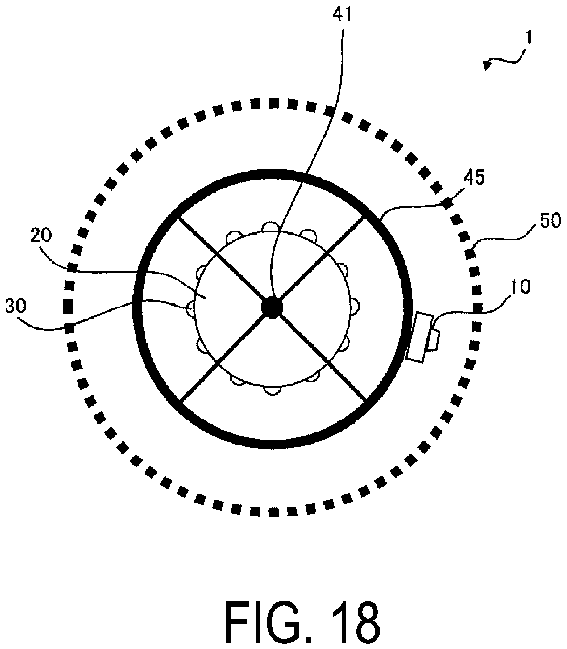

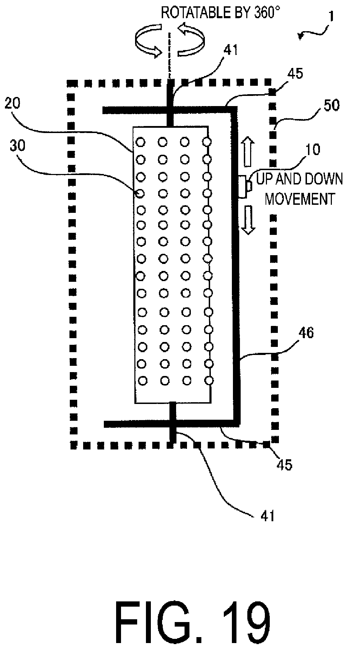

FIG. 18 is a diagram illustrating an outer appearance of the optical communication apparatus 1 viewed from above (direction "A" in FIG. 17), and FIG. 19 is a diagram illustrating an outer appearance of the optical communication apparatus 1 viewed from the side (direction "B" in FIG. 17).

In the fourth variation, the moving mechanism 40 includes the rotation shaft 41 provided in the body portion 20, support members 45 rotatably supported by the rotation shaft 41 and rotationally moving the light emitting element 10 along the outer periphery of the rod-like shape, and a slide mechanism 46 supported by the support members 45 and moving the light emitting element 10 along the longitudinal direction (vertical direction) of the rod-like shape.

The support members 45 have a wheel shape and are attached to the respective end portions of the rotation shaft 41. The support members 45 rotate in the horizontal direction by the rotation of the rotation shaft 41. End portions of the slide mechanism 46 are connected to the upper and lower support members 45, respectively. The slide mechanism 46 moves the light emitting element 10 up and down along the vertical direction.

The optical communication apparatus 1 is configured as described above, and the control according to the above-described embodiment can also be applied to this optical communication apparatus 1.

### (8) Fifth Variation

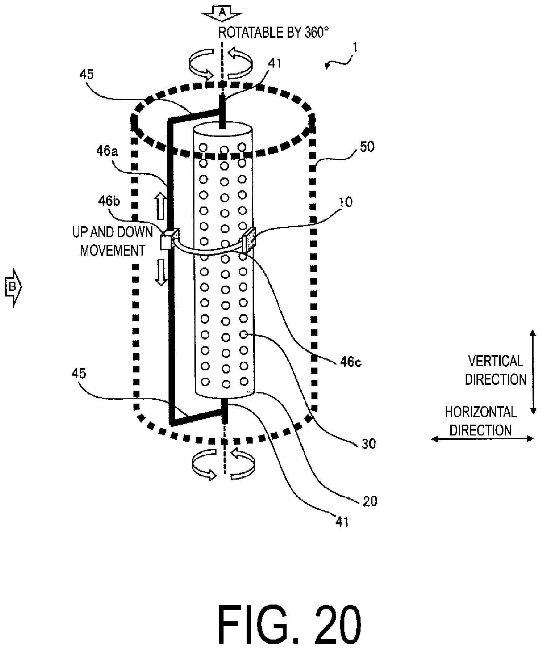

Now, with reference to FIG. 20, a fifth variation of the optical communication apparatus 1 according to the embodiment described above will be described.

In the optical communication apparatus 1 according to the fifth variation, the body portion 20 has a rod-like shape as in the fourth variation described above. Specifically, the body portion 20 has a columnar shape. Similarly, the housing 50, which is light transmissive, also has a columnar shape. However, the optical communication apparatus 1 according to the fifth variation differs from that according to the fourth variation in the configuration of the moving mechanism 40.

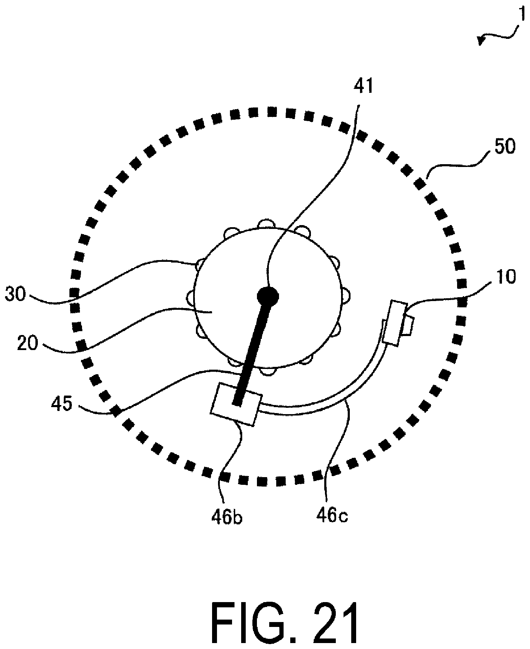

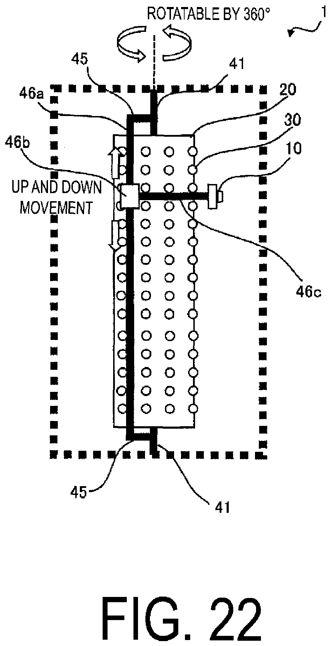

FIG. 21 is a diagram illustrating an outer appearance of the optical communication apparatus 1 viewed from above (direction "A" in FIG. 20), and FIG. 22 is a diagram illustrating an outer appearance of the optical communication apparatus 1 viewed from the side (direction "B" in FIG. 20).

In the fifth variation, the moving mechanism 40 includes the rotation shaft 41 provided in the body portion 20, the support member 45 rotatably supported by the rotation shaft 41 and rotationally moving the light emitting element 10 along the outer periphery of the rod-like shape, and the slide mechanism 46 supported by the support member 45 and moving the light emitting element 10 along the longitudinal direction (vertical direction) of the rod-like shape. Here, the slide mechanism 46 includes a rail 46a extending in the vertical direction and connected to the upper and lower support members 45 at the respective end portions of the rail 46a, a movable portion 46b that moves in the rail 46a shape, and an arm 46c extending in the horizontal direction from the movable portion 46b. The light emitting element 10 is attached to the arm 46c.

The optical communication apparatus 1 is configured as described above, and the control according to the above-described embodiment can also be applied to this optical communication apparatus 1.

### (9) Other Embodiments

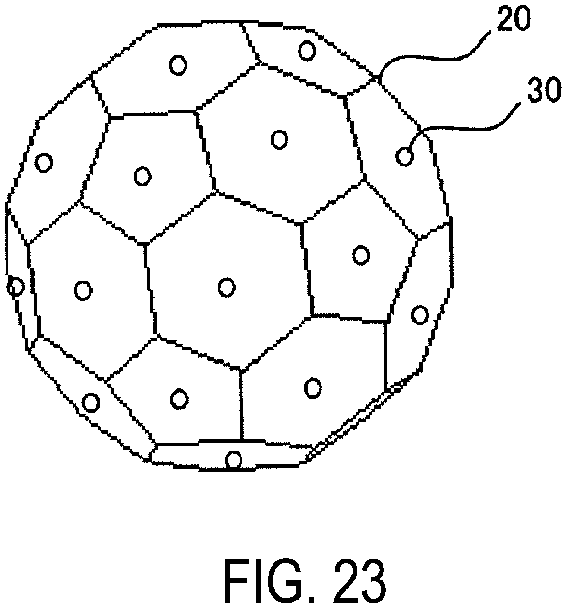

In the above-described embodiment, an example has been described in which the body portion 20 has a spherical shape. However, the spherical shape is not limited to a perfect sphere, and as illustrated in FIG. 23, the body portion 20 may be a polyhedron. A light receiving element 30 is provided on each of the surfaces of the polyhedron. Such a polyhedron is also included in the spherical body portion 20. The spherical shape is not limited to a perfect sphere and may be a hemisphere. When the body portion 20 has a hemispherical shape, the plurality of light receiving elements 30 are disposed on a curved surface of the hemisphere.

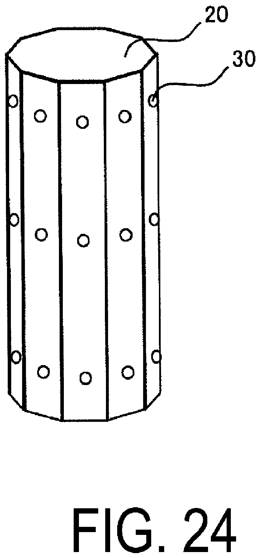

In the fourth and fifth variations described above, an example has been described in which the body portion 20 has a columnar shape as a rod-like shape. However, the rod-like shape is not limited to the columnar shape, and as illustrated in FIG. 24, the body portion 20 may have a prismatic shape. The light receiving element 30 is provided on each of the side surfaces of the prism.

The variations described above are not limited to separate and independent implementations but two or more of the variations may be combined for implementation.

A program may be provided that causes a computer to execute each processing operation performed by the optical communication apparatus 1. The program may be recorded in a computer readable medium. Use of the computer readable medium enables the program to be installed on a computer. Here, the computer readable medium on which the program is recorded may be a non-transitory recording medium. The non-transitory recording medium is not particularly limited. The non-transitory recording medium may be, for example, a recording medium such as a CD-ROM or a DVD-ROM. Circuits for performing each piece of processing performed by the optical communication apparatus 1 may be integrated, and at least part of the optical communication apparatus 1 may be configured as a semiconductor integrated circuit (chipset, System on a chip (SoC)).

The phrases "based on" and "depending on/in response to" used in the present disclosure do not mean "based only on" and "only depending on/in response to," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variations can be made without departing from the gist of the present disclosure.

The present application claims priority to Japanese Patent Application No. 2022-088396 (filed on May 31, 2022), the contents of which are incorporated herein by reference in their entirety.

### (10) Supplementary Note

Features relating to the embodiment described above will be described below as supplementary notes.

### Supplementary Note 1

An optical communication apparatus including:
a light emitting element,
a body portion having a spherical shape or a rod-like shape,
a plurality of light receiving elements arranged on a surface of the body portion at predetermined intervals;
a moving mechanism configured to movably support the light emitting element above the surface, and
a controller configured to control the moving mechanism to move the light emitting element to a position facing another optical communication apparatus based on a reception status of an optical signal received by the plurality of light receiving elements from the other optical communication apparatus.

### Supplementary Note 2

The optical communication apparatus according to Supplementary Note 1, wherein
the body portion has the spherical shape, and
the moving mechanism includes:
   a first rotation shaft provided in the body portion;
   a first arm rotatably supported by the first rotation shaft and configured to rotationally move the light emitting element in a first direction;
   a second rotation shaft provided in the first arm; and
   a second arm rotatably supported by the second rotation shaft and configured to rotationally move the light emitting element in a second direction orthogonal to the first direction.

### Supplementary Note 3

The optical communication apparatus according to Supplementary Note 1, wherein the body portion has the rod-like shape, and
the moving mechanism includes:
a rotation shaft provided in the body portion;
a support member rotatably supported by the rotation shaft and configured to rotationally move the light emitting element along an outer periphery of the rod-like shape; and a slide mechanism supported by the support member and configured to move the light emitting element along a longitudinal direction of the rod-like shape.

### Supplementary Note 4

The optical communication apparatus according to any one of Supplementary Notes 1 to 3, wherein
the controller is configured to control the moving mechanism to move the light emitting element to, as a target position, a position near the one of the plurality of light receiving elements having the highest reception intensity of the optical signal.

### Supplementary Note 5

The optical communication apparatus according to Supplementary Note 4, wherein the controller is configured to:
identify a first light receiving element having the highest reception intensity of the optical signal and a second light receiving element having a second highest reception intensity of the optical signal; and
control the moving mechanism to move the light emitting element to, as the target position, a position on a straight line connecting the first light receiving element and the second light receiving element or a position near the straight line.

### Supplementary Note 6

The optical communication apparatus according to any one of Supplementary Notes 1 to 5, wherein
the controller is configured to control, when moving the light emitting element, the moving mechanism in such a manner that the light emitting element does not pass directly above each of the plurality of light receiving elements.

### Supplementary Note 7

The optical communication apparatus according to Supplementary Note 6, wherein the plurality of light receiving elements are arranged in a two dimensional array in a vertical direction and in a horizontal direction, and
the controller is configured to control the moving mechanism to move the light emitting element in the vertical direction and in the horizontal direction in a time division manner when the controller moves the light emitting element.

### Supplementary Note 8

The optical communication apparatus according to any one of Supplementary Notes 1 to 7, wherein
the controller is configured to control the plurality of light receiving elements to perform a reception operation in optical communication with the other optical communication apparatus by using a light receiving element group including only the one of the plurality of light receiving elements having the highest reception intensity of the optical signal and adjacent ones of the plurality of light receiving elements adjacent to the one of the plurality of light receiving elements having the highest reception intensity.

### Supplementary Note 9

The optical communication apparatus according to Supplementary Note 8, wherein
the controller is configured to control the plurality of light receiving elements to perform a reception operation of a pilot signal from an optical communication apparatus other than the other optical communication apparatus, by using any of the plurality of light receiving elements not included in the light receiving element group.

### Supplementary Note 10

The optical communication apparatus according to any one of Supplementary Notes 1 to 9, wherein
the controller is configured to control, when detecting that optical communication with the other optical communication apparatus is disrupted, the moving mechanism to sequentially move the light emitting element away from a position near the one of the plurality of light receiving elements having the highest reception intensity before the optical communication was disrupted until the optical communication is restored, in order of increasing distance from the one of the plurality of light receiving elements having the highest reception intensity.

### Supplementary Note 11

The optical communication apparatus according to any one of Supplementary Notes 1 to 10, further including:
a sensor configured to detect shaking of the optical communication apparatus,
wherein the controller is configured to change, based on an output of the sensor, a control frequency being a frequency of performing movement control of the light emitting element based on the reception status.

### Supplementary Note 12

The optical communication apparatus according to any one of Supplementary Notes 1 to 11, further including:
an optical mechanism configured to adjust a directivity angle of the light emitting element,
wherein the controller is configured to:
   determine a change frequency that is a frequency at which the one of the plurality of light receiving elements having the highest reception intensity of the optical signal is changed; and
   control the optical mechanism to increase the directivity angle when the change frequency exceeds a predetermined frequency.

### Supplementary Note 13

The optical communication apparatus according to Supplementary Note 12, wherein the controller is configured to control the optical mechanism to increase the directivity angle and to control the optical mechanism to reduce a throughput of optical communication with the other optical communication apparatus.

### Supplementary Note 14

The optical communication apparatus according to any one of Supplementary Notes 1 to 13, further including:
a camera configured to capture an image,
wherein the controller is configured to control the moving mechanism based on the reception status of the optical signal and image data obtained by the camera.

### Supplementary Note 15

The optical communication apparatus according to any one of Supplementary Notes 1 to 14, further including:
a housing configured to accommodate the light emitting element, the body portion, the plurality of light receiving elements, and the moving mechanism,
wherein the housing is made of a light-transmissive material.

### Supplementary Note 16

The optical communication apparatus according to any one of Supplementary Notes 1 to 15, wherein
the optical communication apparatus is an underwater optical communication apparatus configured to perform underwater optical communication.

### Supplementary Note 17

An optical communication method executed by an optical communication apparatus, the optical communication method including the steps of:
receiving an optical signal from another optical communication apparatus by using a plurality of light receiving elements arranged at predetermined intervals on a surface of a body portion having a spherical shape or a rod-like shape; and
performing control to move, based on a reception status of the optical signal, a light emitting element to a position facing the other optical communication apparatus, by using a moving mechanism configured to movably support the light emitting element above the surface.

### Supplementary Note 18

An optical communication program causing an optical communication apparatus to execute the steps of:
receiving an optical signal from another optical communication apparatus by using a plurality of light receiving elements arranged at predetermined intervals on a surface of a body portion having a spherical shape or a rod-like shape; and
performing control to move, based on a reception status of the optical signal, a light emitting element to a position facing the other optical communication apparatus, by using a moving mechanism configured to movably support the light emitting element above the surface.

### REFERENCE SIGNS

1: Optical communication apparatus
10: Light emitting element
20: Body portion
30: Light receiving element
40: Moving mechanism
41: Rotation shaft (first rotation shaft)
42: First arm
43: Second rotation shaft
44: Second arm
45: Support member
46: Slide mechanism
46a: Rail
46b: Movable portion
46c: Arm
50: Housing
60: Optical mechanism
110: Controller
111: Processor
112: Memory
120: Sensor
130: Camera
140: Communicator

## Claims

1. An optical communication apparatus comprising:
a light emitting element;
a body portion having a spherical shape or a rod-like shape;
a plurality of light receiving elements arranged on a surface of the body portion at predetermined intervals;
a moving mechanism configured to movably support the light emitting element above the surface; and
a controller configured to control the moving mechanism to move the light emitting element to a position facing another optical communication apparatus, based on a reception status of an optical signal received by the plurality of light receiving elements from the other optical communication apparatus.

2. The optical communication apparatus according to claim 1, wherein
the body portion has the spherical shape, and
the moving mechanism comprises:
a first rotation shaft provided in the body portion;
a first arm rotatably supported by the first rotation shaft and configured to rotationally move the light emitting element in a first direction;
a second rotation shaft provided in the first arm; and
a second arm rotatably supported by the second rotation shaft and configured to rotationally move the light emitting element in a second direction orthogonal to the first direction.

3. The optical communication apparatus according to claim 1, wherein
the body portion has the rod-like shape, and
the moving mechanism comprises:
a rotation shaft provided in the body portion;
a support member rotatably supported by the rotation shaft and configured to rotationally move the light emitting element along an outer periphery of the rod-like shape; and
a slide mechanism supported by the support member and configured to move the light emitting element along a longitudinal direction of the rod-like shape.

4. The optical communication apparatus according to claim 1, wherein
the controller is configured to control the moving mechanism to move the light emitting element to, as a target position, a position near one of the plurality of light receiving elements having a highest reception intensity of the optical signal.

5. The optical communication apparatus according to claim 4, wherein
the controller is configured to:
identify a first light receiving element having the highest reception intensity of the optical signal and a second light receiving element having a second highest reception intensity of the optical signal; and
control the moving mechanism to move the light emitting element to, as the target position, a position on a straight line connecting the first light receiving element and the second light receiving element or a position near the straight line.

6. The optical communication apparatus according to claim 1, wherein
the controller is configured to control, when moving the light emitting element, the moving mechanism in such a manner that the light emitting element does not pass directly above each of the plurality of light receiving elements.

7. The optical communication apparatus according to claim 6, wherein
the plurality of light receiving elements are arranged in a two dimensional array in a vertical direction and in a horizontal direction, and
the controller is configured to control, when moving the light emitting element, the moving mechanism to move the light emitting element in the vertical direction and in the horizontal direction in a time division manner.

8. The optical communication apparatus according to claim 1, wherein
the controller is configured to control the plurality of light receiving elements to perform a reception operation in optical communication with the other optical communication apparatus, by using a light receiving element group comprising only one of the plurality of light receiving elements having a highest reception intensity of the optical signal and adjacent ones of the plurality of light receiving elements adjacent to the one of the plurality of light receiving elements having the highest reception intensity.

9. The optical communication apparatus according to claim 8, wherein
the controller is configured to control the plurality of light receiving elements to perform a reception operation of a pilot signal from an optical communication apparatus other than the other optical communication apparatus, by using any of the plurality of light receiving elements not included in the light receiving element group.

10. The optical communication apparatus according to claim 1, wherein
the controller is configured to control, when detecting that optical communication with the other optical communication apparatus is disrupted, the moving mechanism to sequentially move the light emitting element away from a position near one of the plurality of light receiving elements having a highest reception intensity before the optical communication was disrupted until the optical communication is restored, in order of increasing distance from the one of the plurality of light receiving elements having the highest reception intensity.

11. The optical communication apparatus according to claim 1, further comprising:
a sensor configured to detect shaking of the optical communication apparatus,
wherein the controller is configured to change, based on an output of the sensor, a control frequency being a frequency of performing movement control of the light emitting element based on the reception status.

12. The optical communication apparatus according to claim 1, further comprising:
an optical mechanism configured to adjust a directivity angle of the light emitting element,
wherein the controller is configured to:
determine a change frequency that is a frequency at which one of the plurality of light receiving elements having a highest reception intensity of the optical signal is changed; and
control the optical mechanism to increase the directivity angle when the change frequency exceeds a predetermined frequency.

13. The optical communication apparatus according to claim 12, wherein
the controller is configured to control the optical mechanism to increase the directivity angle and to control the optical mechanism to reduce a throughput of optical communication with the other optical communication apparatus.

14. The optical communication apparatus according to claim **1,** further comprising:
a camera configured to capture an image,
wherein the controller is configured to control the moving mechanism based on the reception status of the optical signal and image data obtained by the camera.

15. The optical communication apparatus according to claim **1,** further comprising:
a housing configured to accommodate the light emitting element, the body portion, the plurality of light receiving elements, and the moving mechanism,
wherein the housing is made of a light-transmissive material.

16. The optical communication apparatus according to any one of claims 1 to 15, wherein
the optical communication apparatus is an underwater optical communication apparatus configured to perform underwater optical communication.

17. An optical communication method executed by an optical communication apparatus, the optical communication method comprising the steps of:
receiving an optical signal from another optical communication apparatus by using a plurality of light receiving elements arranged at predetermined intervals on a surface of a body portion having a spherical shape or a rod-like shape; and
performing control to move, based on a reception status of the optical signal, a light emitting element to a position facing the other optical communication apparatus, by using a moving mechanism configured to movably support the light emitting element above the surface.

18. An optical communication program causing an optical communication apparatus to execute the steps of:
receiving an optical signal from another optical communication apparatus by using a plurality of light receiving elements arranged at predetermined intervals on a surface of a body portion having a spherical shape or a rod-like shape; and
performing control to move, based on a reception status of the optical signal, a light emitting element to a position facing the other optical communication apparatus, by using a moving mechanism configured to movably support the light emitting element above the surface.
